## Europäisches Patentamt

## European Patent Office

## Office européen des brevets

(11) Publication number: **0 164 508**
**B1**

(12) **EUROPEAN PATENT SPECIFICATION**

(45) Date of publication of patent specification: **17.11.88**

(21) Application number: **85103316.7**

(22) Date of filing: **21.03.85**

(51) Int. Cl.⁴: **C 02 F 3/06, C 02 F 3/10, B 01 F 5/00**

(54) Sewage treatment apparatus.

(30) Priority: **16.05.84 JP 98217/84**

(43) Date of publication of application:
**18.12.85 Bulletin 85/51**

(45) Publication of the grant of the patent:
**17.11.88 Bulletin 88/46**

(84) Designated Contracting States:
**DE FR GB IT SE**

(56) References cited:
**DE-A-1 609 016**
**US-A-4 282 172**
**US-A-4 411 780**

(73) Proprietor: **NIPPON SANGYO KIKAI KABUSHIKI KAISHA**
**No. 9-9, Nihonbashi Koami-Cho**
**Chuo-Ku Tokyo (JP)**

(72) Inventor: **Suzuki, Kensuke**
**No. 55-16, Tokumaru 1-chome**
**Itabashi-Ku, Tokyo (JP)**
Inventor: **Okada, Sunao**
**No. 14-6, Koshien Sanban-Cho**
**Nishinomiya-Shi, Hyogo (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

## Description

The present invention relates to a sewage treatment apparatus according to the preamble part of Claim 1.

A conventional method known from US—A—4 411 780 employs a catalytic oxidation treatment tank shaped in a tower or a deep well as a sewage treatment apparatus; a large number of cord-shaped contact materials are stretched vertically inside the tank; a circulation pipe is inserted into the center of the tank; this circulation pipe, to which a liquid pump is connected, is supplied with air in the middle portion thereof; and the water to be treated which contains air is discharged from the lower end of the circulation pipe, made to rise in contact with the biological sludge adhering to the cord-shaped contact materials in the tank, and then made to be sucked into the circulation pipe for re-circulation from a circulated-liquid receiving tank provided in the upper part of the aforesaid tank. According to this method, the water to be treated which is discharged from the lower end of the circulation pipe is forced to rise among the cord-shaped contact materials provided vertically. When the rising flow rate is increased, however, turbulence is invariably generated, and thereby currents are formed, resulting in the diversion of the route of flow. Moreover, a slight difference in intervals among the contact materials, and the temperature difference caused by sunshine, affect a rising flow to cause a drift and a convection locally and thereby to make the flow rate unsteady in the whole of the tank, which hinders the sludge from sticking uniformly to the cord-shaped contact materials. As the result, the quantity of the sticking sludge varies so as to prevent the flow of water, and finally the phenomenon of clogging occurs. This causes the diversion of the water flow, and in general, the action of treatment is rendered ineffective.

In view of the problem described above, the present invention aims to obtain a sewage treatment apparatus in which the water to be treated is discharged as a swirling flow from the lower end of a circulation pipe so as to make it rise as the swirling flow inside a treatment tank, thus preventing the local occurrence of drift and convection, making the water contact uniformly with the entire contact materials, making uniform the quantity of sludge sticking to said materials, and preventing consequently the occurrence of clogging.

In the sewage treatment apparatus comprising a treatment tank, a large number of cord-shaped contact materials provided in vertical suspension under the water surface in said treatment tank, and a circulation pipe which is inserted into the center of said treatment tank, with the lower end opened below the group of said cord-shaped contact materials, and, while sucking air in the middle portion thereof, circulates forcedly the water to be treated inside the treatment tank, a sewage treatment apparatus of the present invention devised for the above-described object is provided, at the lower end of said circulation pipe, with a swirling flow generating head discharging the water to be treated, as a swirling flow, from the circulation pipe so that the water to be treated can rise as the swirling flow inside the treatment tank, circulate uniformly therein and contact uniformly with the cord-shaped contact materials.

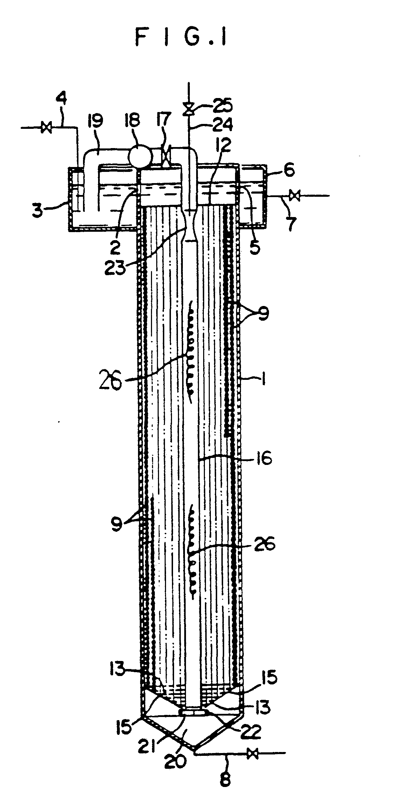

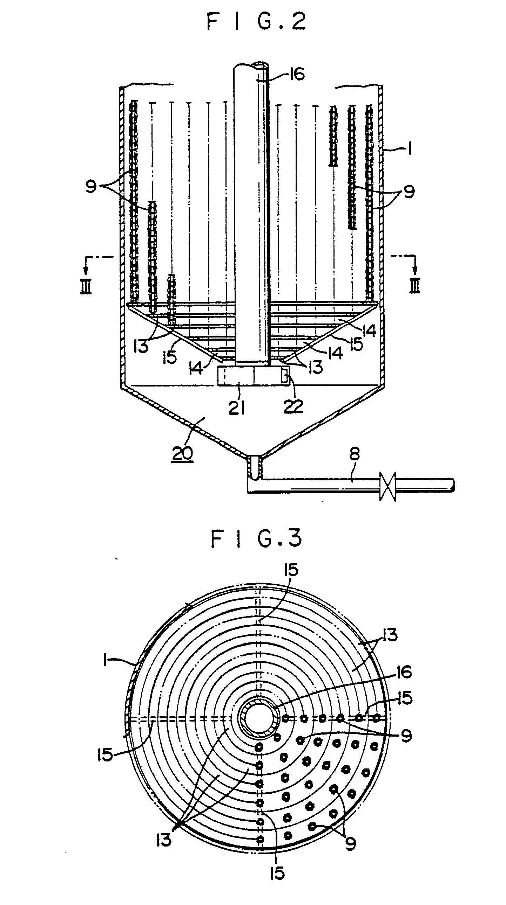

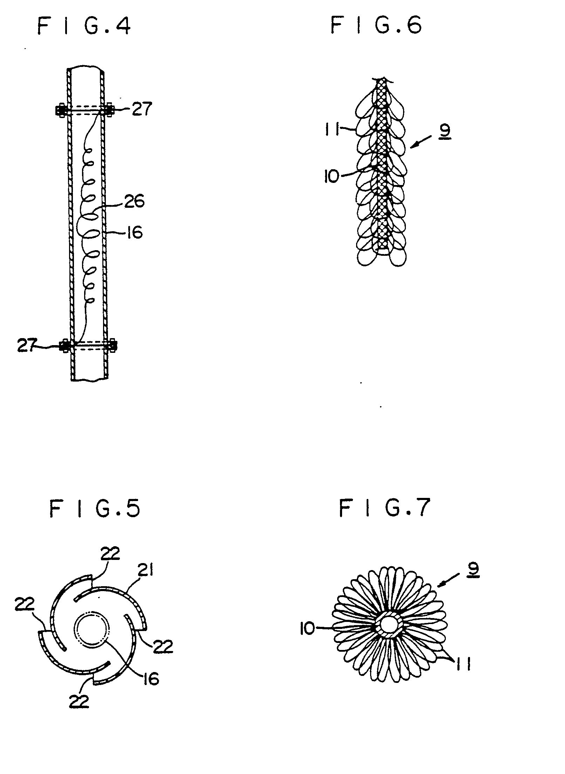

Figure 1 shows a longitudinal sectional view of an apparatus which is one embodiment of the present invention; Figure 2 shows an enlarged longitudinal front view of the lower part of a treatment tank; Figure 3 shows a section taken along a line III—III of Fig. 2; Figure 4 shows a longitudinal front view of a part of a circulation pipe; Figure 5 shows a transverse plan view of a swirling flow generating head; Figure 6 shows an enlarged front view of a part of a cord-shaped contact material; and Figure 7 shows an enlarged transverse plan view of said part of the cord-shaped contact material.

One embodiment of the present invention will be described hereunder with reference to Figs. 1 to 7.

Numeral 1 denotes a treatment tank shaped in a tower or a deep well. A circulated-water receiving tank 3 communicating with said treatment tank 1 through a communication port 2 is formed on one side of the upper end of the treatment tank 1, and a raw water supply pipe 4 is led into said circulated water receiving tank 3. On the other side of the upper end of said treatment tank 1, a treated-water receiving tank 6 communicating with said tank 1 through a communication port 5 is formed, and a treated-water discharge pipe 7 is led out of said tank 6. Moreover, a drain pipe 8 is led out of the lower end of the treatment tank 1.

Inside the treatment tank 1 a large number of flexible cord-shaped contact materials 9 are stretched in the vertical direction. Each of the cord-shaped contact materials 9 is formed by providing a large number of ring-shaped fibers 11 in projection on the circumference of a core material 10 formed of knitted synthetic fibers. The upper ends of these cord-shaped contact materials 9 are fitted to a supporting frame 12 provided near the upper end of the treatment tank 1, while the lower ends thereof are fitted to ring-shaped bodies 13 which are arranged concentrically in a plurality of stages near the bottom of the treatment tank 1. The ring-shaped bodies 13 are formed to be smaller in diameter gradually from the upper stage toward the low, and are connected at several places to one another by connection rods 15 so that prescribed water flow spaces 14 are formed between the upper and lower ring-shaped bodies 13, while said connection rods 15 are supported by ropes which are not shown in the figure but suspended from the upper end of the treatment tank 1. The ring-shaped bodies 13 are separated from the treatment tank 1 so that they can be moved vertically together with the cord-shaped contact materials 9.

Numeral 16 denotes a circulation pipe, which is inserted into the center of the treatment tank 1, with the upper end projecting above the treatment tank 1, and communicates with a suction pipe 19 inserted into said circulated-water receiving tank 3, through a circulation control valve 17 and a circulation pump 18. The lower end of the circulation pipe 16 projects into a space part 20 located below the group of the cord-shaped contact materials 9 at the lower end of the treatment tank 1, and a swirling flow generating head 21 discharging the water to be treated as a swirling flow is connected to the lower end of the pipe 16. The swirling flow generating head 21 communicates with the lower end of the circulation pipe 16, and discharge ports 22 shaped in nozzles are opened in the tangential direction at several places of the peripheral surface of the head. On the other hand, a venturi part 23 is formed in the upper portion of the circulation pipe 16, and an air suction pipe 24 inserted from the upper end of the circulation pipe 16 is opened in said venturi part 23, while an air control valve 25 is provided in the middle of the air suction pipe 24. An agitating body 26 is inserted into a portion below the venturi part 23 of the circulation pipe 16. The agitating body 26 is formed of a spiral wire in such a manner that the diameter thereof is large in the intermediate portion and becomes smaller gradually toward both ends thereof, and these ends are held between and fixed by flanges 27 which joins the circulation pipe 16 vertically.

Next, a description will be made on the operation of the above-described embodiment.

By the operation of the circulation pump 18, circulating water mixed with raw water is sucked into the circulation pipe 16 from the suction pipe 19 and flows down through the circulation pipe 16. Then, air is sucked from the air suction pipe 24 into the venturi part 23 in the middle of the pipe 16 by the operation of venturi and mixed there in the water to be treated. When the water falls down further to the position of the agitating body 26, it is mixed and agitated by the spiral with different diameters, whereby the air is diffused uniformly into the water to be treated and thus the solution of oxygen into the water is increased. When the water to be treated, which is agitated for atomizing and mixing air therein in this way, falls further down to the swirling flow generating head 21 at the lower end, it is discharged from a plurality of discharge ports 22 which are opened in the tangential direction in the periphery of the head, thus a swirling flow being generated in the space part 20 positioned at the lower end of the treatment tank 1. The swirling flow thus generated rises as it is from the multi-staged spaces 14 of the ring-shaped bodies 13 which are formed above the space part 20 and arranged in the form of an inverse cone, and rises further in swirling among the large number of cord-shaped contact materials 9 provided in suspension. Consequently, the liquid to be treated circulates uniformly from the central part over to the peripheral part inside the treatment tank 1, while circulating also in the direction in which it crosses the cord-shaped contact materials obliquely. Therefore no local drift and convection are formed, while the contact with the contact materials 9 is ensured. Part of the water to be treated, which reaches the upper part of the treatment tank 1 while being subjected to the aerobic biological treatment in this way, flows out into the treated-water receiving tank 6 and discharged through the treated-water discharge pipe 7, while the remainder flows out into the circulated-water receiving tank 3 and sucked again into the suction pipe 19 together with raw water so as to be circulated.

The flexible cord-shaped contact materials 9 provided with numbers of ring-shaped fibers 11 on the circumference retain the sludge excellently, and allow the water to flow excellently therethrough since they are stretched vertically. In addition, since these materials 9 are stretched in such a manner that they are fixed only at the upper and lower ends thereof, the intermediate portions thereof swing smoothly with the move of the swirling flow, thus the entire materials 9 effectuating the smooth action of the aerobic treatment.

According to the present invention, the sewage treatment apparatus, which comprises the treatment tank, a large number of cord-shaped contact materials provided in vertical suspension under the surface of the water in said treatment tank, and the circulation pipe which is inserted into the center of said treatment tank, with the lower end opened below the group of said cord-shaped contact materials, and while sucking air in the middle portion thereof, circulates forcedly the water to be treated inside said treatment tank, is provided, at the lower end of said circulation pipe, with the swirling flow generating head which discharges the water to be treated, as a swirling flow, from this circulation pipe. Owing to this construction, the water to be treated, which is discharged as the swirling flow from the swirling flow generating head, rises in swirling through the treatment tank, and thus flows uniformly from the central part over to the peripheral part inside the treatment tank, while flowing in the direction in which it crosses the cord-shaped contact materials provided in vertical suspension. Therefore, no local drift and convection occur inside the treatment tank, and the contact with the cord-shaped contact materials is also ensured. As a result, the quantity of the sludge sticking to said contact materials is maintained uniform, and thus the smooth action of the aerobic treatment can be effectuated.

**Claims**

1. A sewage treatment apparatus which comprises a treatment tank (1), a large number of cord-shaped contact materials (9) provided in vertical suspension under the surface of the water in said treatment tank (1), and a circulation pipe (16) which extends along a central vertical axis of said treatment tank (1), with the lower end of said pipe opening below said cord-shaped contact materials (9), said pipe being arranged so that air introduced along the axis of the pipe will entrain water to be treated so as to cause it to circulate forcedly inside the treatment tank (1), characterized in that a swirling flow generating head (21) discharging the water to be treated, as a swirling flow, from said circulation pipe (16) is provided at the lower end of said circulation pipe (16).

2. A sewage treatment apparatus according to Claim 1, which is characterized in that said circulation pipe (16) is provided with an agitating body (26) in the middle portion thereof.

**Patentansprüche**

1. Abwasserbehandlungsgerät mit einem Behandlungstank (1), mit einer großen Anzahl von schnurartigen Kontaktmaterialien (9), die in vertikaler Aufhängung unter der Wasseroberfläche in dem Behandlungstank (1) angeordnet, und mit einer Zirkulationsröhre (16), die in die Mitte des Behandlungstanks (1) eingesetzt ist, wobei das untere Ende unterhalb der schnurartigen Kontaktmaterialien (9) öffnet, und wobei die Röhre in ihrem Mittelbereich Luft einsaugt, welche das zu behandelnde Wasser innerhalb des Behandlungstanks (1) zwangszirkulieren läßt, dadurch gekennzeichnet, daß am unteren Ende der Zirkulationsröhre (16) ein Verwirbelungskopf (21) angeordnet ist, aus dem das zu behandelnde Wasser aus der Zirkulationsröhre (16) als Wirbelstrom austritt.

2. Abwasserbehandlungsgerät nach Anspruch 1, dadurch gekennzeichnet, daß die Zirkulationsröhre (16) in ihrem mittleren Bereich einen Agitationskörper (26) aufweist.

**Revendications**

1. Appareil de traitement des eaux usées qui comprend une cuve de traitement (1), un grand nombre d'éléments de contact (9) en forme de cordes, disposés en suspension verticale au-dessous de la surface de l'eau dans ladite cuve de traitement (1) et une conduite de recyclage (16) qui s'étend le long de l'axe vertical central de ladite cuve de traitement (1), l'extrémité inférieure de ladite conduite s'ouvrant au-dessous du niveau desdits éléments de contact (9) en forme de cordes, ladite conduite étant agencée de telle manière que de l'air introduit selon l'axe de la conduite entraîne l'eau à traiter de manière à la mettre en circulation forcée à l'intérieur de la cuve de traitement (1), caractérisé en ce qu'il est prévu à l'extrémité inférieure de ladite conduite de recyclage (16) une tête génératrice de courant tourbillonnaire (21) qui éjecte l'eau à traiter en un écoulement tourbillonnaire au sortir de ladite conduite de recyclage (16).

2. Appareil de traitement des eaux usées selon la revendication 1, caractérisé en ce que ladite conduite de recyclage (16) est équipée d'un élément agitateur (26) dans sa partie centrale.

# F I G . I

FIG.2

FIG.3

F I G.4

F I G.6

F I G.5

F I G.7